# EUROPÄISCHE PATENTSCHRIFT

(11) **EP 1 189 041 B1**
(45) Veröffentlichungstag und Bekanntmachung des Hinweises auf die Patenterteilung: **21.11.2007**
(21) Anmeldenummer: 01250319.9
(22) Anmeldetag: 06.09.2001
(51) Int. Cl.: G01G 19/00

(54) **Verfahren zur Steuerung einer schnellen dynamischen Waage**
Method for controlling a high speed dynamic weighing apparatus
Procédé pour contrôler une balance dynamique à grande vitesse

(30) Priorität: 13.09.2000 DE 10046205
(43) Veröffentlichungstag der Anmeldung: 20.03.2002
(73) Patentinhaber: Francotyp-Postalia GmbH, 16547 Birkenwerder (DE)
(72) Erfinder: Kunde, Christoph, 13469 Berlin (DE); Hübler, Uwe, 15366 Neuenhagen (DE)

(56) Entgegenhaltungen:
- EP-A- 0 514 107
- EP-A- 0 858 055
- EP-A- 0 871 145
- US-A- 3 436 968
- US-A- 5 723 825

## Beschreibung

Die Erfindung betrifft ein Verfahren zur Steuerung einer schnellen dynamischen Waage, gemäß des Oberbegriffs des Anspruchs 1. Die Lösung eignet sich besonders für eine schnelle Mischpostverarbeitung in einem Postverarbeitungssystem mit einer dynamischen Waage und portoberechnenden Frankiermaschine bzw. mit dynamischen Portorechnerwaagen und Frankiereinrichtungen.

In der europäischen Patentanmeldung EP 1014 050 A1 wurde ein Verfahren und eine Anordnung zur Steuerung einer dynamischen Waage vorgeschlagen, die gemischtes Postgut mit unterschiedlicher Größe, Dicke verarbeiten kann, und die in mindestens zwei Betriebsmoden betrieben werden kann, wobei das Postgut anschließend eine weitere Verarbeitungsstation durchläuft. Der dynamische Betriebsmodus wird in besonderer Weise an Poststücke angepasst, so dass deren Aussicht erfolgreich dynamisch gewogen zu werden hoch ist. Der statische Betriebsmodus für ein halbdynamischen Wiegen beginnt nach einem erfolglosen dynamischen Wiegen.

In der deutschen Offenlegungsschrift DE 198 60 295 A1 wurde bereits ein Verfahren zur Steuerung einer dynamischen Waage vorgeschlagen, wobei die Transportgeschwindigkeit der Poststücke durch Verändern von Betriebsparametern der dynamischen Waage bei bestimmten Betriebsmodi erhöht werden kann. Die Betriebmodi werden vom Benutzer via Userinterface einer angeschlossenen Frankiermaschine ausgewählt. Die Auswahl richtet sich nach der Zusammensetzung des zu verarbeitenden Briefstapels, wobei der Benutzer die Zusammensetzung kennt oder anhand von Erfahrungswerten einschätzen kann. Allerdings geht der Vorteil der höheren Transportgeschwindigkeit verloren, bei einer Fehleinschätzung durch eine Umschaltung während des dynamischen Wiegens auf eine verringerte Transportgeschwindigkeit, ggf. eine zusätzlich erforderliche Nachmessung oder bei "echter" Mischpost durch den eingestellten Betriebsmodus. Unter Mischpost wird ein unsortierter Stapel an Poststücken verstanden.

Gemäß der EP 514 107 B1 wird von einer Steuereinrichtung bei Poststücken, die sich dynamisch nicht wiegen ließen, deren Transport solange unterbrochen, bis die Messung stabil ist. In der Waage ist nahe dem stromabwärts gerichteten Transportbandende ein Detektor angeordnet, welchen nur Briefe durchlaufen, für die deren Gewicht bis zu diesem Zeitpunkt bestimmt worden ist. Bei ungleich verteilter Masse im Brief und hoher Transportgeschwindigkeit treten Messfehler auch beim halbdynamischen Wiegen auf. Ein Anhalten zum halbdynamischen Wiegen auf der Wiegeplattform koppelt erneut Schwingungen in das System ein, die die Messzeit verlängern. Außerdem kann bei einem Stopp der Brief durch seine Massenträgheit vom Wiegeteller rutschen. Deshalb sind die Abmessungen des Wiegetellers etwas größer ausgelegt bzw. die Transportgeschwindigkeit kleiner festgelegt, was den Durchsatz bei Mischpost verringert.

Eine optische Vermessung ruhender Poststücke mit einer anschließenden elektronischen Auswertung ist aus dem EP 858 055 A1 bekannt.

Eine Volumenbestimmung eines sich bewegenden Gegenstandes vor einem Wiegen durchzuführen, ist aus dem US 3.436.968 für ein Prozess-Steuerungssystem bekannt.

Laut dem EP 871 145 A1 werden Gebühren in Abhängigkeit von den Abmessungen eine Kuverts vor einem Frankieren bestimmt.

Aus der US 5.723.825 ist ein Transportgerät bekannt, die Postgut einer Waage in einer ersten Richtung zuführt und dann in einer zweiten Richtung abtransportiert. Diese vorgenannten Maßnahmen erhöhen aber nicht die Taktleistung.

Die maximalen Taktleistung wird bei einer dynamischen Waage im Nicht-Wiege-Modus erreicht, da die Transportgeschwindigkeit erhöht und der Abstand zwischen den Poststücken minimiert werden kann. Im Gegensatz zur Mischpostverarbeitung muss der Poststückstapel vorsortiert sein. Ist das nicht gewährleistet, können nach einem dynamischen Wiegen einzelne Poststücke des Stapels an Poststücken aussortiert werden.

Aus der deutschen Offenlegungsschrift DE 198 58 229 ist ein Verfahren zum Erfassen von Postgut und eine Postsortieranlage vorgeschlagen worden, die eine Gewichtskontrolle im Verhältnis zum Volumen des Postgutes durchführt und unzulässiges Postgut ausschleust.

Bereits aus der deutschen Offenlegungsschrift DE 27 17 721 ist eine Anlage zur Frankierung von Postsendungen mit einer Weiche bekannt, welche poststromabwärts nach einer dynamischen Waage angeordnet ist.

Eine zugehörige Transporteinrichtung übergibt, die Postsendung an die Weiche. Dort wird die Postsendung aussortiert, wenn diese abnorme Gewichtswerte aufweist. Bei normalen Gewichtswerten transportiert die Transporteinrichtung der Weiche die Postsendung weiter zur Frankiermaschine. Auf diese Weise wird eine hohe Taktleistung von bis zu 66 % der maximalen Taktleistung erreicht. Allerdings sind die aussortierten Poststücke ungewogen.

Wenn es keine ungewogenen aussortierten Poststücke geben soll, dann muss entweder eine Anordnung zum halbdynamischen Wiegen mit einem Anhalten zum Wiegen (US 3.904,946) oder eine Postgutbehandlungsmaschine mit dynamischer Anpassung der Transportgeschwindigkeit zum Wiegen entsprechend der Dicke oder Größe des Poststückes (EP 376 481 B1) vorgesehen werden. Alternativ kann auch eine Anordnung zur Steuerung eines dynamischen Waage-Fördersystems mit einem dynamischen Nachwiegen (DE 200 01 150 U1) vorgesehen werden. Eine Anpassung der Transportgeschwindigkeit zum dynamischen Wiegen oder ein dynamisches Nachwiegen führen nicht immer zum Erfolg. Aufgrund großer Abmessungen (Format, Dicke) von Poststücken und insbesondere von Poststücken mit einem ungleichmäßigen Dickenprofil existieren Poststücke, deren Aussicht gering ist, erfolgreich dynamisch gewogen zu werden. Das halbdynamischen Wiegen beinhaltet ein statisches Wiegen nach einem erfolglosen dynamischen Wiegen. Die vorgenannten Zeiten zweier Wiegevorgänge addieren sich zu einer Gesamtzeit. Es ist also Messzeit für das dynamische Wiegen, Zeit für das Anhalten und das statische Wiegen erforderlich, um einen stabilen Messwert zuerhalten.

Es war die Aufgabe zu lösen, die Nachteile des Standes der Technik zu überwinden und ein Verfahren zur Steuerung einer schnellen dynamischen Waage zu schaffen. Durch Verbesserung der Steuerung der dynamischen Waage sollen einer weiteren Verarbeitungsstation schneller Daten zur Verfügung gestellt werden.

Die Aufgabe wird mit den Merkmalen des Verfahrens nach Anspruch 1 gelöst.

Die Erfindung geht davon aus, dass eine automatische Betriebsartenumschaltung bereits frühzeitig vorgenommen wird. Durch Dimensionsbestimmung in einer poststromaufwärts angeordneten Verarbeitungsstation und durch eine Auswertung ist es vor dem Wiegevorgang vorherbestimmbar, ob ein dynamischen oder statisches Wiegen durchgeführt werden muss. Beim statischen Wiegen entfallen die Zeiten für ein nicht erforderliches dynamischen Wiegen und für die Einschwingzeit nach dem dynamischen Wiegen beim Rückwärtsbewegen und Anhalten. Beim Auflaufen des Poststückes auf den Wiegeteller der dynamischen Waage findet ein kürzerer Einschwingvorgang zum statischen Wiegen und ein Anhalten der Transportbewegung statt. Ein Rückwärtsbewegen des Poststückes ist nicht erforderlich. Beim dynamischen Wiegen entfallen die Zeiten für ein dynamisches Nachwiegen und für ein Rückwärtsbewegen. Daraus resultiert eine Verkürzung der Gesamtzeit und die Waage kann die Daten der Frankiermaschine früher zur Verfügung stellen.

Bei der vorgenannten Auswertung wird festgestellt, ob die für ein dynamisches Wiegen zulässigen Werte durch eine der Dimensionen oder bezüglich eines zulässigen Dickenprofiles überschritten werden. Eine Auswertung des Dickenprofils des Poststückes führt zur einer Bewertung, ob Poststücke, deren Dicke noch im Bereich der dynamischen Wägbarkeit liegen, eine so ungünstige Gewichtsverteilung haben könnten, die ein unsicheres Wägeergebnis erwarten lässt, beispielsweise bei Schwerpunktlage an der Peripherie des Poststückes.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Perspektivische Ansicht einer dynamischen Waage von vorn rechts,
- Figur 2,: Blockschaltbild eines Postverarbeitungssystems,
- Figur 3,: Flussdiagramm für die Steuerung der Waage,
- Figur 4,: Teilablaufplan für ein dynamisches Wiegen,
- Figur 5,: Teilablaufplan für ein statisches Wiegen.

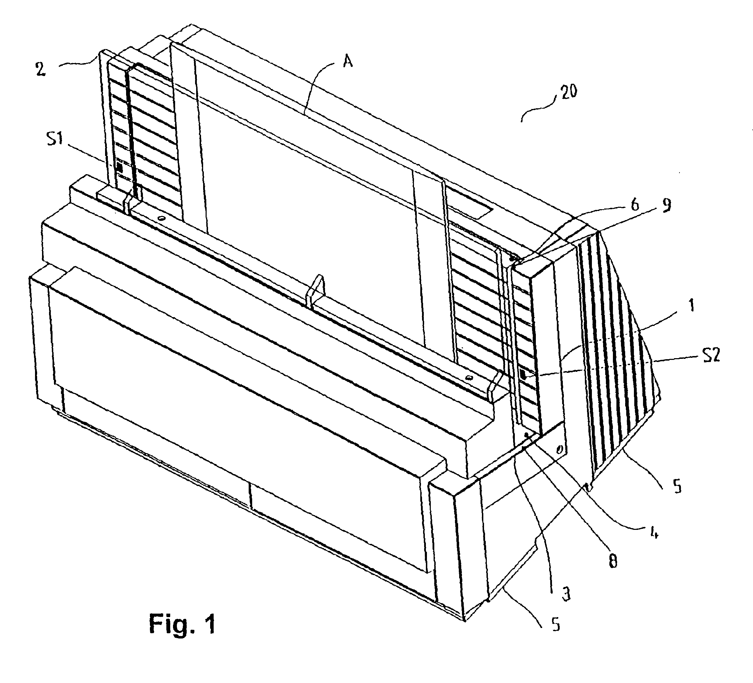

In der Figur 1 wird eine perspektivische Ansicht einer dynamischen Waage 20 dargestellt, die für den Transport von auf der Kante stehenden Briefen bzw. Poststücken A ausgebildet ist. Letztere liegen an einem Wiegeteller 6 an, welcher in einer Ausnehmung 9 in einer hinteren Führungswand 1 der Waage angeordnet ist. Beidseitig der Ausnehmung 9 für den Wiegeteller 6 sind in der hinteren Führungswand 1 Sensoren S1 und S2 angeordnet. In Höhe der unteren Führungswand 3 der Waage liegt eine Transporteinrichtung 4 mit einem Transportriemen, der unterhalb der Sensoren S1 und S2 umgelenkt wird. Die hintere Führungswand 1 ist leicht nach hinten geneigt, vorzugsweise um 18° über die Senkrechte hinaus. Das entspricht einem bereits für eine automatische Briefzuführung und eine Frankiermaschine ermittelten Optimierungswinkel, siehe auch DE 196 05 014 C1 und DE 196 05 015 C1. Die untere Führungswand 3 ist orthogonal zur hinteren und demzufolge auch zur vorderen Abdeckplatte 2 angeordnet. Damit wird eine definierte Brieflage und eine harmonische Anpassung an die vor- und nachgeordneten Geräte erreicht. Die vordere Abdeckplatte 2 besteht beispielsweise aus Plexiglas. Das Hinterende 8 der als Adapter zur Frankiermaschine ausgebildeten unteren Führungswand 3 im Briefauslauf der Waage ist so gestaltet, dass der Brief A während des Verlassens eines (verdeckten) Transportriemens zunächst frei liegt. Alle genannten Baugruppen bzw. Teile sind über entsprechende Zwischenstücke auf einem Chassis 5 befestigt. Ein (verdeckter) Motor 29 weist eine Nachgiebigkeit auf, welche in vorteilhafter Weise in Verbindung mit der Anordnung der Transporteinrichtung 4 am Wiegeteller 6 Stöße und Schwingungen bei schweren Poststücken bedämpft. Beispielsweise ist ein Gleichstrommotor vom Typ M42x15 Gefeg-Antriebstechnik geeignet.

Die Einzelheiten zum konstruktiven Aufbau der bevorzugte verwendeten dynamischen Waage sind dem deutschen Patent DE 198 33 767 C2 entnehmbar. Auch andere bekannte Waagen für waagerecht zu transportierende Briefe oder mit andersartiger Transporteinrichtung können für entsprechende Frankiermaschinen natürlich ebenso in modifizierter Form eingesetzt werden.

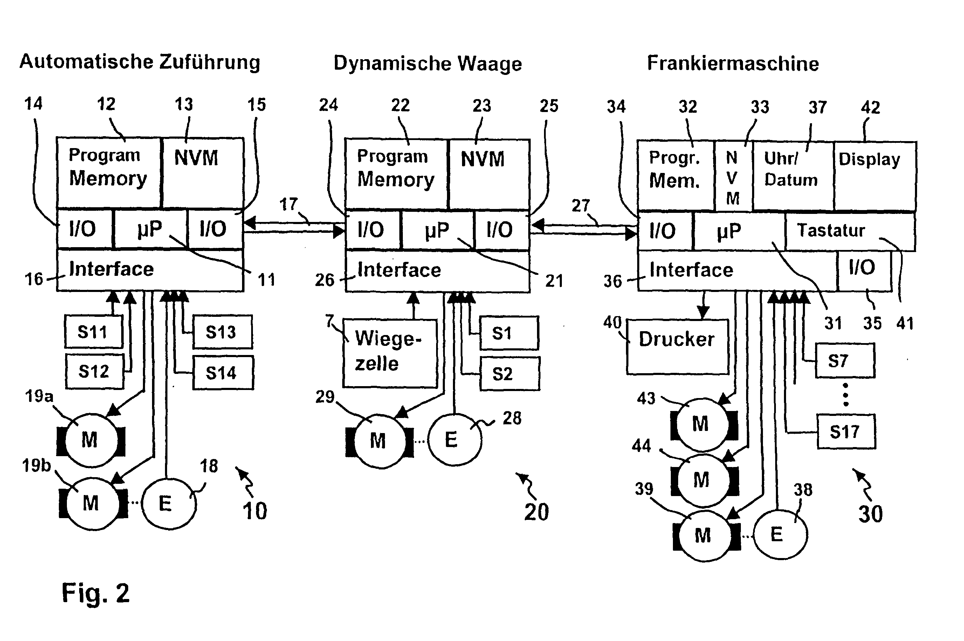

Anhand der Figur 2 wird das Blockschaltbild eines Postverarbeitungssystems mit einer ersten Verarbeitungsstation 10 (hier eine automatische Zuführung), einer dynamischen Waage 20 und einer weiteren Verarbeitungsstation 30 (hier eine Frankiermaschine) erläutert. Die Steuereinheit der automatischen Zuführung weist einen Mikroprozessor 11 auf, welcher mit einem Programmspeicher 12, mit einem nichtflüchtigen Speicher 13, mit Ein- und Ausgabe-Schnittstellen 14, 15 sowie mit einem Interface 16 zur Ansteuerung der Motoren 19a, 19b, Abfrage eines Encoders 18 und von Sensoren S11, S12, S13, S14 zur Format- und Dickenbestimmung verbunden ist. Die Details sind beschrieben in der deutschen Patentanmeldung 198 36 235 A1 (Vorrichtung zum Vereinzeln von Druckträgern) und in den nicht vorveröffentlichten deutschen Patentanmeldungen 199 13 065 (Verfahren und Anordnung zur Durchlaufsteuerung von Druckträgern) und 199 12 807 (Anordnung zur Dimensionsbestimmung von Druckträgern). Der Sensor S11 der automatischen Zuführung dient zur Höhenmessung, der Sensor S12 dient zur Dickenmessung und die Sensoren S13 und S14 dienen zur Längenmessung eines stehend transportierten Poststückes.

Die Blockschaltbilder der Steuerung der automatischen Zuführung 10 und der dynamischen Waage 20 sind nur bezüglich der angeschlossenen Sensoren unterschiedlich. Die Steuereinheit der dynamischen Waage 20, weist einen Mikroprozessor 21 auf, welcher mit einem Programmspeicher 22, mit einem nichtflüchtigen Speicher 23, mit Ein- und Ausgabe-Schnittstellen 24, 25 sowie mit einem Interface 26 zur Ansteuerung eines Motors 29 der Transporteinrichtung der Waage, Abfrage eines Encoders 28, der Wiegezelle 7 und der Sensoren S1, S2 verbunden ist.

Die weitere Verarbeitungsstation 30 ist eine Frankiermaschine, vorzugsweise vom Typ JetMail®, und umfasst einen Mikroprozessor 31, welcher mit einem Programmspeicher 32, mit einem nichtflüchtigen Speicher 33, mit einem Uhren/Datums-Baustein 37, Ein- und Ausgabe-Schnittstellen 34, 35 sowie mit einem Interface 36 verbunden ist. Letzteres dient zur Ansteuerung des Druckers 40, der Motoren 39, 43, 44, zur Abfrage von Sensoren S7, S17 und weiterer nicht gezeigter Sensoren sowie eines Encoders 18, der mit dem Motor 39 mechanisch gekoppelt ist.

Zur Ein- und Ausgabe von Daten sind die automatische Zuführung und die dynamische Waage 20 über deren Schnittstellen 15 und 24 sowie die dynamische Waage 20 und die Frankiermaschine über deren Schnittstellen 25 und 34 gekoppelt. Mindestens ein auf ein Format und ein auf die Dicke bezogenes Signal wird zur dynamische Waage 20 übermittelt und von dort beispielsweise zur Frankiermaschine weitergeleitet. Im Ergebnis einer Auswertung der Poststückdimensionen können durch den Mikroprozessor 21 entsprechende Steuerbefehle erzeugt werden, um von einem ersten in einen zweiten Betriebsmodus der dynamischen Waage 20 umzuschalten, wobei entsprechende Parameter der dynamischen Waage eingestellt werden. Der Mikroprozessor 21 der dynamischen Waage ermittelt den Gewichtswert und übermittelt letzteren zur Frankiermaschine, welche mittels ihres Mikroprozessors 31 oder mittels eines separaten Portorechners daraus einen Portowert ermittelt, welcher durch einen Drucker 40 auf das Poststück aufgedruckt wird. In der deutschen Patentanmeldung 197 11 997 A1 wurde bereits eine Anordnung zur Kommunikation zwischen einer Basisstation und weiteren Stationen einer Postbearbeitungsmaschine und zu deren Notabschaltung vorgeschlagen.

Beispielsweise ist eine Frankiermaschine, vom Typ JetMail® die Basisstation der Postbearbeitungsmaschine und wird in DE 197 11 997 A1 ausführlicher beschrieben.

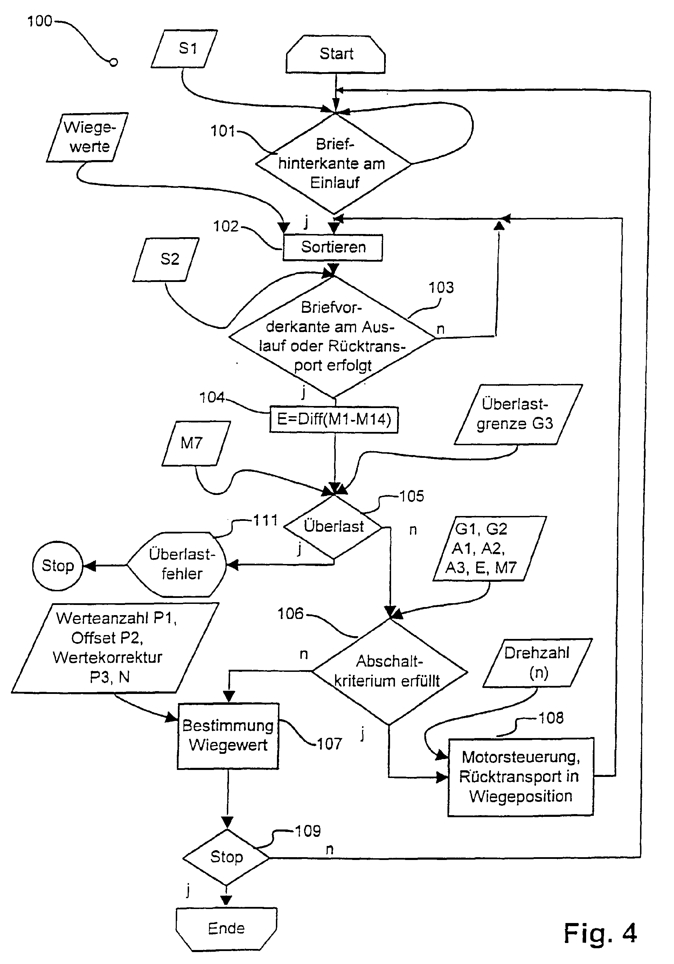

Beispielsweise wird von der automatischen Zuführung zur dynamischen Waage 20 je ein Wert für die Dicke und Höhe sowie ein Umschaltsignal übermittelt. Das Verfahren zur Steuerung einer schnellen dynamischen Waage 20, die eine Messanordnung 7 und 21 umfasst, geht aus, vom Transport von Poststücken mittels einer steuerbaren Transporteinrichtung 4 zu einer weiteren Verarbeitungsstation mit einer ersten Geschwindigkeit, vom Messen mittels einer Wiegezelle 7 während des Transportes und vom Auswerten der Messwerte mittels des Mikroprozessors 21 der dynamischen Waage 20 zur Gewichtsbestimmung beim dynamischen Wiegen in einem ersten Betriebsmodus, wobei in Abhängigkeit vom Ergebnis der Dimensionsbestimmung des nachfolgenden Poststückes in der im Poststrom aufwärts angeordneten ersten Verarbeitungsstation 10 vom ersten auf einen zweiten Betriebsmodus zum statischen Wiegen umgeschaltet wird. Der Mikroprozessor 21 der dynamischen Waage 20 wertet ein Fehlen des Umschaltsignals, als Beibehaltung des ersten Betriebsmodus dynamisch Wiegen (Fig.4). In letzterem wird das Poststück beim dynamischen Wiegen stromabwärts in Richtung der weiteren Verarbeitungsstation 30 mit einer ersten Geschwindigkeit transportiert, deren Maximalwert vom Geschwindigkeitswert der weiteren Verarbeitungsstation 30 begrenzt und deren Sollwert in einem Satz an Parametern zur Steuerung der dynamischen Waage 20 im nichtflüchtigen Speicher 23 gespeichert wird.

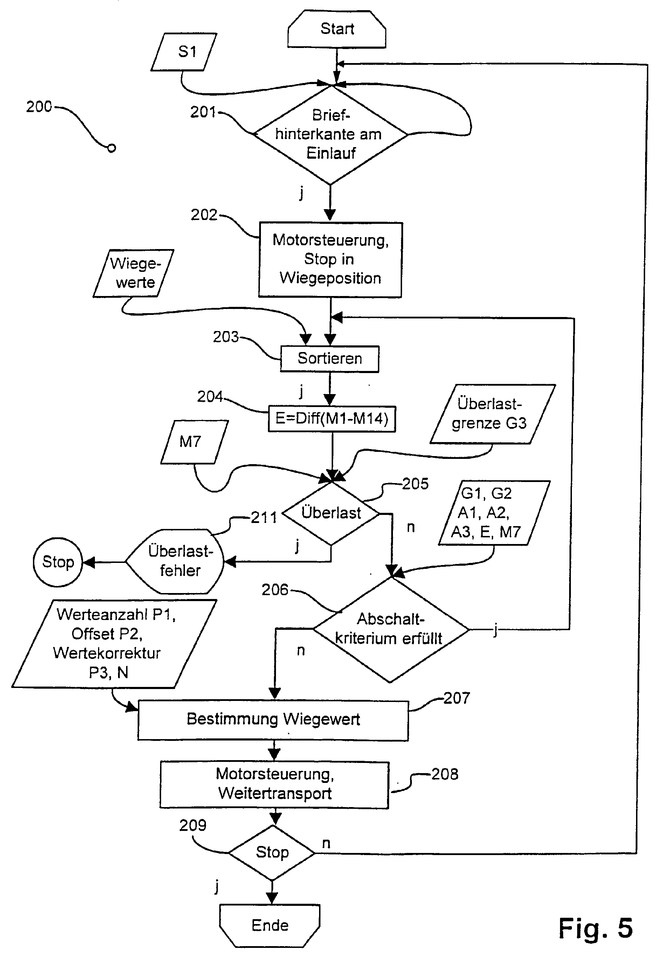

Die erste Verarbeitungsstation 10 ist eine automatische Zuführung mit einer Anordnung zur Dimensionsbestimmung von Druckträgern gemäss der nicht vorveröffentlichten deutschen Patentanmeldung 199 12 807. In deren Auswerteschaltung werden Messwerte der Sensoren mindestens für Dicke, Höhe und Länge der Poststücke A ausgewertet. Vorzugsweise werden die Messwerte in der Steuereinheit der automatischen Zuführung vom Mikroprozessor 11 anhand von im nichtflüchtigen Speicher 13 gespeicherten Kriterien ausgewertet. Die vorgenannten Kriterien können bei der Initialisierung über die Tastatur 41 der Frankiermaschine in den nichtflüchtigen Speicher 13 der automatische Zuführung eingegeben werden. Der Mikroprozessor 11 ist mittels einem Programm im Programmspeicher 12 programmiert, ein Umschaltsignal zu erzeugen, wenn die Wahrscheinlichkeit für ein erfolgreiches dynamisches Wiegen gering ist. Die Umschaltung auf den zweiten Betriebsmodus statisch Wiegen (Fig.5) wird abhängig von der Dimension des Poststücks bestimmt, wobei eine erste Auswertung vom Mikroprozessor 11 der ersten Verarbeitungsstation 10 vorgenommen und ein Umschaltsignal zur dynamischen Waage 20 übermittelt wird, wenn die für ein dynamisches Wiegen zulässigen Werte durch eine der Dimensionen oder bezüglich eines zulässigen Dickenprofiles überschritten werden.

Im zweiten Betriebsmodus statisch Wiegen wird das Poststück stromabwärts in Richtung der weiteren Verarbeitungsstation 30 mit einer vorbestimmten Geschwindigkeit transportiert, gestoppt und dann statisch gewogen. Die vorbestimmte Geschwindigkeit kann gleich einer zweiten oder gleich der ersten Geschwindigkeit sein, mit welcher das Poststück beim dynamischen Wiegen transportiert wird. Der Sollwert ist in einem Parametersatz zur Steuerung der dynamischen Waage 20 im nichtflüchtigen Speicher 23 gespeichert. Die dynamischen Waage 20 ist - in Richtung des Poststromes gesehen - die zweite Verarbeitungsstation. Beim Wiegen wird eine Auswertung der Gewichtsmessung zur Gewichtsbestimmung durchgeführt, wobei eine Anzahl an Parametersätzen zur Steuerung der dynamischen Waage 20 und zur Auswertung der Gewichtsmessung im Speicher 23 bereitgestellt wird. In einer Subvariante ist vorgesehen, dass vorgenannter Parametersatz abhängig von der Dimension des Poststücks ausgewählt wird. Die Parametersätze unterscheiden sich beispielsweise auch in den bei der Gewichtsbestimmung benötigten Abschaltkriterien A1, A2, A3 und der Grenzwerte G1, G2, G3 für Poststückgewichte.

Die Daten bezüglich der Dimension des Poststücks werden zwecks einer ersten Auswertung über eine erste Schnittstelle zur dynamischen Waage 20 und dann gemeinsam mit den ermittelten Gewichtsdaten über eine zweite Schnittstelle zur weiteren Verarbeitungsstation 30 weiter geleitet. Die weitere Verarbeitungsstation 30 besitzt Mittel zur Portoberechnung. Beispielsweise kommt eine Frankiermaschine mit integriertem Portorechner zum Einsatz, um den Portowert in Abhängigkeit von den Dimensionen, vom Gewichtswert und von den übrigen Versandparametern zu berechnen. Die übrigen Parameter werden vorzugsweise an der weiteren Verarbeitungsstation 30 eingegeben, beispielsweise werden die Versandparameter über die Tastatur der Frankiermaschine eingegeben. Über die Tastatur der Frankiermaschine wird auch die Transportgeschwindigkeit für ein dynamisches Wiegen in den nichtflüchtigen Speicher 23 der Waage eingegeben. Diese Eingabe erfolgt jedoch beim Initialisieren der Waage. Der nichtflüchtige Speicher 23, beispielsweise ein E²PROM, enthält maschinenspezifische Parameter und Daten zur Steuerung der Waage, welche aus Erfahrungswerten des Herstellers gewonnen wurden und in Tabellenform gespeichert vorliegen. Der Mikroprozessor 21 verarbeitet Eingangssignale von Sensoren S1 und S2 und die Daten aus dem nichtflüchtigen Speicher 23 und erzeugt in Abhängigkeit von der Briefposition die Ausgangssignale für den Motor 29 der Transporteinrichtung und überwacht das Gewicht bzw. führt eine Gewichtsbestimmung durch. Der Sensor S1, der in der Waage stromaufwärts angeordnet ist, dient als Einlaufsensor und der Sensor S2 stromabwärts dient als Auslaufsensor. Der Sensor kann beispielsweise als Lichtschranke ausgebildet sein und eine integrierte an sich bekannte Auswerteschaltung aufweisen, welche digitale Signale an den Mikroprozessor 21 abgibt.

Der Mikroprozessor 21 steuert über einen Treiber im Interface 26 den Motor 29 an, der mit einem Encoder 28 gekoppelt ist. Der Mikroprozessor 21 ist mit Sensoren S1, S2, dem Encoder 28 und mit der Wiegezelle 7 betriebsmäßig verbunden, um Sensorsignale, Encodersignale und Gewichtsdaten zu empfangen und um Steuerbefehle an den Motor 29 der Transporteinrichtung 4 zu senden. Letzterer ist vorzugsweise ein Gleichstrommotor 29, welcher mit Gleichstromimpulsen gespeist wird, wobei sich aufgrund des Verhältnisses der Impulslänge zur Impulspause eine bestimmte Drehzahl einstellt. Im Betriebsmodus für den dynamischen Betrieb der Waage führt die Transporteinrichtung 4 eine Vorwärtsbewegung des betreffenden Briefes innerhalb der Waage stomabwärts mit einer bestimmten Geschwindigkeit aus, wobei diese Geschwindigkeit die Transportgeschwindigkeit in der weiteren Verarbeitungsstation nicht übersteigt. Alternativ zum Mikroprozessor ist ein Mikrocontroller mit integriertem Speicher als Steuereinheit einsetzbar. Durch die Steuereinheit können entsprechende Steuerbefehle erzeugt werden, durch welche für einen ersten Betriebsmodus die Transportgeschwindigkeit innerhalb der dynamischen Waage eingestellt werden kann. Außerdem ist vorgesehen, dass mit dem Treiber im Interface 26, der zwischen Antrieb und der Steuerung geschaltet ist, die Transportrichtung der Waage umgekehrt werden kann, um in einem der Betriebsmodi den Brief auf der Mitte des Wiegetellers zu positionieren. Der Treiber kann auch als Relais ausgebildet sein, welches die Spannung für den Antriebsmotor der Transporteinrichtung schaltet. Der Motor 29 ist ggf. über ein geeignetes Getriebe mit einer Antriebsrolle verbunden. Das Getriebe kann sowohl ein Zahnradgetriebe als auch ein Riemengetriebe sein.

Es ist unerheblich, welches spezielles Wiegeverfahren in der Wiegezelle 7 zur Anwendung kommt. Die Wiegezelle 7 besitzt beispielsweise eine Dehnungsmeßstreifenbrücke mit angeschlossener Auswerteschaltung, welche digitale Gewichtsdaten an den Mikroprozessor 21 abgibt. Die Wiegezelle 7 ist vorzugsweise vom Typ HBM PW 2G der Firma Hottinger Baldwin Messtechnik. Bei diesem Typ ist eine Auswerteschaltung bereits in die Wiegezelle integriert. Die Auswerteschaltung steht in Verbindung mit dem elektrischen Ausgang der Wiegezelle 7 und hat u.a. die Aufgabe der Kalibrierung und Glättung jedes Messwertes. Aus der Vielzahl der Messwerte kann ein geeigneter Gewichtswert zur Frankiermaschine übermittelt werden. Ein geeignetes Verfahren und Anordnung zum Bestimmen eines Gewichtes mit einer dynamischen Waage ist aus der deutschen Offenlegungsschrift DE 198 60 294 A1 bekannt. Der Programmspeicher 22 der dynamischen Waage weist ein Programm zur Auswertung der Messwerte auf, wobei der Mikroprozessor (µP) 21 der Steuereinheit der dynamischen Waage 20 programmiert ist, nur einen plausiblen Messwert an die Frankiermaschine zu übermitteln.

Nach Aufbereitung des Messwertes in der Waage werden gemäß einer in einem Portorechner der weiteren Verarbeitungsstation 30 gespeicherten Portotabelle eine Gewichtsklasse und schließlich unter Einbeziehung der Dimensionen und weiterer postalischer Informationen, wie Versandart, Versandziel usw. ein Portowert zugeordnet. Diese letzten Schritte können vorzugsweise im Mikroprozessor 31 der Frankiermaschine ausgeführt werden, an welche dann nur der Wiegemesswert übertragen wird. Der Mikroprozessor 21 der dynamischen Waage ist zu diesem Zweck über die serielle Schnittstelle 25, über Kabel 27 und über die serielle Schnittstelle 34 mit dem Mikroprozessor 31 der Frankiermaschine verbunden. Zur Eingabe und Anzeige der weiteren postalischen Informationen und von zusätzlichen Parametern in die Waage wird vorzugsweise eine externe Benutzerschnittstelle benutzt, zum Beispiel die Benutzerschnittstelle der Frankiermaschine. Dem Bediener steht nur eine Tastatur 41 der Frankiermaschine zur Verfügung, die eine Veränderung von Betriebsparametern und Daten erlaubt, die vorzugsweise im nichtflüchtigen Speicher 23 der Waage gespeichert sind. Vorzugsweise wird zur Anzeige der Waageparametereinstellung das Display 42 der Frankiermaschine mit genutzt.

Der Frankieraufdruck wird mittels des Druckers 40 ausgeführt, der beispielsweise in der Base der Frankiermaschine JetMail® angeordnet ist und vorteilhaft einen digital arbeitenden Druckkopf aufweist, beispielsweise einen Ink Jet Druckkopf. Dadurch wird ermöglicht, den bei Mischpost jeweils neu errechneten Frankierwert auch ohne Verzögerung drucken zu können.

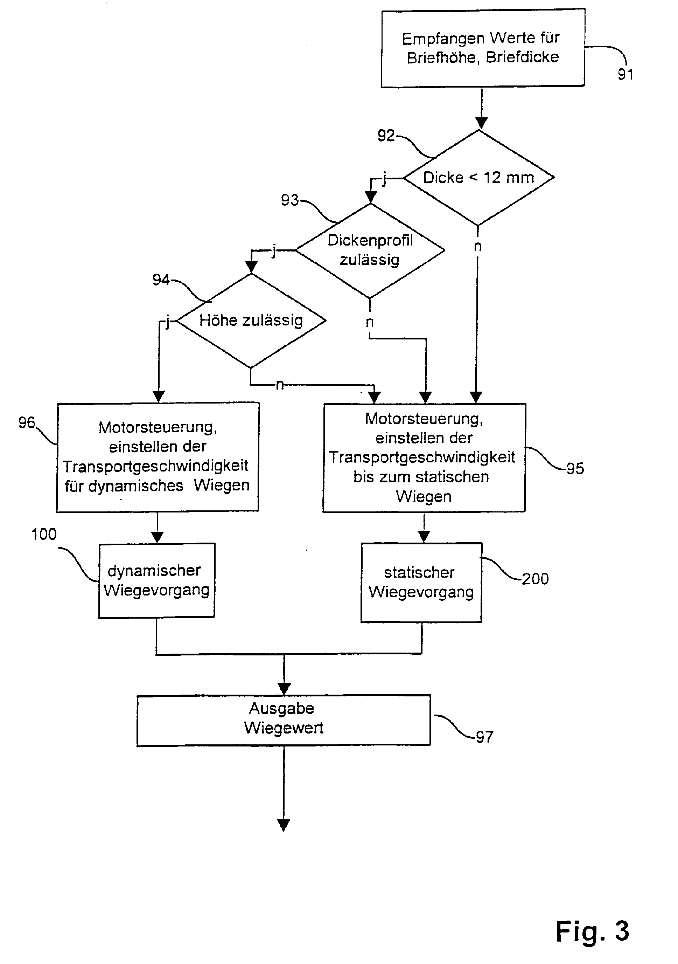

Die Figur 3 zeigt ein Flußdiagramm für die Steuerung der Waage 20 gemäß einer weiteren Variante. Die ersten Verarbeitungsstation 10 überwacht - in nicht gezeigter Weise - die maximale Länge des Poststückes A und stellt ggf. einen Stau fest. Von der ersten Verarbeitungsstation 10 (automatischen Zuführung) wird je ein Wert für die Dicke und Höhe des Poststückes A zur dynamischen Waage 20 jedoch kein Umschaltsignal übermittelt. Die dynamische Waage 20 umfasst eine Messanordnung 4, 6 (Fig.1) und 7, 21 (Fig.2). Das Verfahren zu deren Steuerung geht von einem Transport von Poststücken A mittels einer steuerbaren Transporteinrichtung 4 zur weiteren Verarbeitungsstation mit einer ersten Geschwindigkeit, von einem Messen mittels einer Wiegezelle 7 während des Transportes und von einem Auswerten der Messwerte mittels des Mikroprozessors 21 der dynamischen Waage 20 zur Gewichtsbestimmung aus, wobei in Abhängigkeit vom Ergebnis der Dimensionsbestimmung des Poststückes in der im Poststrom aufwärts angeordneten ersten Verarbeitungsstation 10 und vom Ergebnis einer Auswertung der Dimensionsbestimmung in der Waage 20, letztere von einem ersten auf einen zweiten Betriebsmodus umgeschaltet wird.

In einen Schritt 91 werden die Werte für Höhe und Dicke empfangen und ausgewertet. Dann wird auf einen ersten Abfrageschritt 92 verzweigt, um zu prüfen, ob die Dicke einen vorbestimmten Grenzwert unterschreitet. Dann wird auf einen zweiten Abfrageschritt 93 verzweigt, um zu prüfen, ob die Dickenschwankung im Rahmen eines zulässigen Dickenprofils liegt. Und dann wird auf einen dritten Abfrageschritt 94 verzweigt, um zu prüfen, ob die Höhe im zulässigen Bereich liegt. Ist das der Fall, wird der erste Betriebsmodus dynamisch Wiegen beibehalten und über einen Schritt 96 zum Unterprogramm im Schritt 100 verzweigt. Ist das nicht der Fall, d.h. Dicke, Höhe oder Dickenprofil zeigen unzulässige Werte, dann wird auf den zweiten Betriebsmodus statisch Wiegen umgeschaltet und über einen Schritt 95 zum Unterprogramm im Schritt 200 verzweigt. Im Schritt 95 wird dann die Motorsteuerung für eine Transportgeschwindigkeit eingestellt, mit welcher ein Poststück transportiert werden soll, bis eine optimale Wiegeposition zum statischen Wiegen auf dem Wiegeteller erreicht ist.

Alternativ können im Schritt 91 die Werte für ein Format des Poststückes empfangen und im dritten Abfrageschritt 94 überprüft werden, ob die Werte des Formates im zulässigen Bereich liegen.

Im Schritt 96 wird dagegen die Motorsteuerung für eine Transportgeschwindigkeit eingestellt, die empirisch für ein erfolgreiches dynamisches Wiegen ermittelt wurde. Nach einem erfolgreichen Wiegen erfolgt eine Ausgabe des Wiegewertes im Schritt 97 an die nachfolgende Verarbeitungsstation und eine Zurückverzweigung (nichtgezeigt) zum Schritt 91.

Die Steuereinheit 21 der Waage 20 erzeugt also ein Umschaltsignal vor einem Wiegen, wenn eine Beibehaltung eines ersten Betriebsmodus (dynamisch Wiegen) nicht erfolgversprechend ist. Im Schritt 95 kann zunächst die Motorsteuerung auf die gleiche Transportgeschwindigkeit eingestellt werden, mit welcher ein Poststück beim dynamischen Wiegen transportiert wird. Im Verlauf des Schrittes 200 wird dann die Transportgeschwindigkeit auf den Wert Null verringert, der erreicht wird, wenn vom Poststück eine optimale Wiegeposition zum statischen Wiegen auf dem Wiegeteller eingenommen worden ist.

Die Figur 4 zeigt Teilablaufplan 100 für ein dynamisches Wiegen. Der Mikroprozessor kann mittels des Sensors S1 am Briefeinlauf die Briefvorderkannte feststellen und startet die Gewichtsbestimmung. Ständig werden Wiegemesswerte von der Wiegezelle 7 geliefert. Der Mikroprozessor hat mittels des Sensors S1 am Briefeinlauf die Briefhinterkante erkannt (im Schritt 101) und startet ein Unterprogramm Sortieren (im Schritt 102). Das Sortieren wird mit ständig neu gelieferten und den bisherigen Wiegewerten durchgeführt. Nach einem Zeitablauf erkennt der Mikroprozessor mittels des Sensors S2 am Briefauslauf 32 die Briefvorderkante (im Schritt 103). Der für eine Erfassung der (durch den Parameter P3) vorbestimmte Anzahl an letzten Messwerten verstrichene Zeitbereich wird als Messzeitbereich T1 bezeichnet. Der Mikroprozessor bildet nun einen Entscheidungsparameter E im Schritt 104 als Differenzwert zwischen dem sortierten größten und kleinsten Wert und startet die Abfrage nach mindestens einer Überlast im Schritt 105. Der Messwert M7 wird mit dem höchsten Überlastgrenzwert G3 verglichen. Ein gegebenenfalls vorliegender Überlastfehler wird (im Schritt 111) weiter ausgewertet und die Waage gestoppt. Liegt keine Überlast vor, dann wird in einem weiterem Abfrageschritt 106 festgestellt, ob der Wert gültig oder ungültig ist. Dazu wird ein Unterprogramm aufgerufen. Der Differenzwert E aus dem ersten M1 und vierzehnten sortierten Messwert M14 soll innerhalb des Gewichtsbereichs eines der Abschaltkriterien A1, A2 oder A3 liegen. Er liegt beispielsweise innerhalb des vom zweiten Abschaltkriteriums A2 definierten Bereiches und ergibt somit gültige Messwerte. Da keines der Abschaltkriterien erfüllt ist kann nun zur Bestimmung des Wiegewertes auf den Schritt 107 verzweigt werden, in welchen ein weiteres Unterprogramm aufgerufen wird. Anderenfalls, bei ungültigen Messwerten, wird auf den Schritt 108 verzweigt, wo die Motorsteuerung umgeschaltet wird, um den Rücktransport des Poststückes in die Wiegeposition und um ein Nachwiegen zu veranlassen. Die Drehzahl n wird vom Encoder 50 festgestellt und kann zur Drehzahlsteuerung verwendet werden. Vom Schritt 108 wird dann auf den Schritt 102 zum Sortieren zurückverzweigt. Die mögliche Verzweigung zum Nachwiegen (Schritt 108) findet aufgrund der Erfindung nun praktisch nicht mehr statt. Wenn die Waage nicht gestoppt wird, was im Schritt 109 abgefragt wird, dann wird vom Schritt 109 auf den Schritt 101 zurückverzweigt. Bei einem festgestellten Stopp-Befehl wird das Ende des Betreibens der Waage erreicht (Schritt 110). Im Schritt 107 erfolgt die Gewichtsbestimmung. Bei erfolgreicher Gewichtsbestimmung wird das Wiegeergebnis an die Frankiermaschine übergeben. Eine detailliertere Darstellung des Verfahrens zum Bestimmen eines Gewichtes mit einer dynamischen Waage ist der deutschen Offenlegungsschrift DE 198 60 294 A1 entnehmbar.

Die Figur 5 zeigt Teilablaufplan 200 für ein statisches Wiegen. Der Mikroprozessor kann mittels des Sensors S1 am Briefeinlauf die Briefvorderkannte feststellen und startet die Gewichtsbestimmung. Ständig werden Wiegemesswerte von der Wiegezelle 7 geliefert. Der Mikroprozessor hat mittels des Sensors S1 am Briefeinlauf die Briefhinterkante erkannt (im Schritt 201) und wartet das Erreichen der Wiegeposition ab. Im Schritt 202 wird dann der Motor auf Stop gesteuert. Im Schritt 203 startet ein Unterprogramm Sortieren, das mit ständig neu gelieferten und den bisherigen Wiegewerten durchgeführt wird. Nach einem Zeitablauf im Messzeitbereich T1 bildet der Mikroprozessor 21 einen Entscheidungsparameter E im Schritt 204 als Differenzwert zwischen dem sortierten größten und kleinsten Wert und startet die Abfrage nach mindestens einer Überlast im Schritt 205. Der Messwert M7 wird mit dem höchsten Überlastgrenzwert G3 verglichen. Ein gegebenenfalls vorliegender Überlastfehler wird (im Schritt 211) weiter ausgewertet und die Waage gestoppt. Liegt keine Überlast vor, dann wird in einem weiterem Abfrageschritt 206 festgestellt, ob der Wert gültig oder ungültig ist. Dazu wird ein Unterprogramm aufgerufen. Der Differenzwert E aus dem ersten M1 und vierzehnten sortierten Messwert M14 soll innerhalb des Gewichtsbereichs eines der Abschaltkriterien A1, A2 oder A3 liegen. Er liegt beispielsweise innerhalb des vom zweiten Abschaltkriteriums A2 definierten Bereiches und ergibt somit gültige Messwerte. Da keines der Abschaltkriterien erfüllt ist, kann nun zur Bestimmung des Wiegewertes auf den Schritt 207 verzweigt werden, in welchen ein weiteres Unterprogramm aufgerufen wird. Anderenfalls, bei ungültigen Messwerten, wird auf den Schritt 203 zurückverzweigt, wo ein Nachwiegen in derselben Wiegeposition durchgeführt wird. Die erfolgreiche Bestimmung des Wiegewertes führt zur Übergabe des Wiegeergebnisses an die Frankiermaschine und der Weitertransport (im Schritt 208) wird veranlasst.

Wenn die Waage nicht (beispielsweise manuell) gestoppt wird, was im Schritt 209 abgefragt wird, dann wird vom Schritt 209 auf den Schritt 201 zurückverzweigt. Bei einem festgestellten Stopp-Befehl wird das Ende des Betreibens der Waage erreicht.

Eine automatische Umschaltung in den ersten Betriebsmodus zum dynamischen Wiegen erfolgt ebenfalls in Abhängigkeit vom Ergebnis der Dimensionsbestimmung des nachfolgenden Poststückes in der im Poststrom aufwärts angeordneten ersten Verarbeitungsstation 10. Letztere ist vorzugsweise eine automatische Zuführung.

Möglich ist jedoch auch eine andere erste Verarbeitungsstation 10, beispielsweise eine - nicht dargestellte - Kuvertierstation, welche mit entsprechenden Mitteln zur Format- und Dickenbestimmung ausgerüstet wird.

Die Erfindung ist nicht auf die vorliegenden Ausführungsform beschränkt, da offensichtlich weitere andere Ausführungen der Erfindung entwickelt bzw. eingesetzt werden können, die vom gleichen Grundgedanken der Erfindung ausgehend, die von den anliegenden Ansprüchen umfasst werden.

## Patentansprüche

1. Verfahren zur Steuerung einer schnellen dynamischen Waage, mit einem Steuern der Transporteinrichtung (4) beim Transport von Poststücken (A) zu einer weiteren Verarbeitungsstation (30), mit einem Messen mittels einer Wiegezelle (7) während des Transportes und einem Auswerten der Messwerte mittels des Mikroprozessors (21) der dynamischen Waage (20) zur Gewichtsbestimmung beim dynamischen Wiegen in einem ersten Betriebsmodus und Liefern von Wiegewerten zu der weiteren Verarbeitungsstation (30), sowie mit einer automatischen Umschaltung in einen zweiten Betriebsmodus zum halbdynamischen Betrieb der Waage (20) mit statischen Wiegen, **gekennzeichnet dadurch, dass** die automatische Umschaltung in Abhängigkeit vom Ergebnis einer Bestimmung der Dimensionen des nachfolgend an die Waage (20) gelieferten Poststückes (A) in einer im Poststrom aufwärts angeordneten ersten Verarbeitungsstation (10) erfolgt.

2. Verfahren, nach Anspruch 1, **dadurch gekennzeichnet, dass** vor dem Wiegen des Poststückes (A) eine Dimensionsbestimmung und erste Auswertung vom Mikroprozessor (11) der ersten Verarbeitungsstation (10) durchgeführt und ein Umschaltsignal zur dynamischen Waage (20) übermittelt wird, wenn die für ein dynamisches Wiegen zulässigen Werte durch eine der Dimensionen oder bezüglich eines zulässigen Dickenprofiles überschritten werden, und dass im zweiten Betriebsmodus zum statischen Wiegen das Poststück (A) stromabwärts in Richtung der weiteren Verarbeitungsstation (30) mit einer vorbestimmten Geschwindigkeit transportiert, gestoppt und dann statisch gewogen wird.

3. Verfahren, nach Anspruch 2, **dadurch gekennzeichnet, dass** der Transport von Poststücken (A) mittels der steuerbaren Transporteinrichtung (4) zu der weiteren Verarbeitungsstation (30) in beiden Betriebsmodi mit einer ersten Geschwindigkeit erfolgt, deren Maximalwert vom Geschwindigkeitswert der weiteren Verarbeitungsstation (30) begrenzt und deren Sollwert in einem Parametersatz zur Steuerung der dynamischen Waage (20) im nichtflüchtigen Speicher (23) gespeichert ist.

4. Verfahren, nach Anspruch 2, **dadurch gekennzeichnet, dass** der Transport von Poststücken (A) mittels der steuerbaren Transporteinrichtung (4) zu der weiteren Verarbeitungsstation (30) im zweiten Betriebsmodus mit einer zweiten Geschwindigkeit erfolgt, deren Sollwert in einem Parametersatz zur Steuerung der dynamischen Waage (20) im nichtflüchtigen Speicher (23) gespeichert ist.

5. Verfahren, nach Anspruch 1, **dadurch gekennzeichnet, dass** in Abhängigkeit vom Ergebnis der Dimensionsbestimmung des Poststückes (A) in der im Poststrom aufwärts angeordneten ersten Verarbeitungsstation (10) und vom Ergebnis einer Auswertung der Dimensionsbestimmung in der Waage (20) von einem ersten auf einen zweiten Betriebsmodus umgeschaltet wird, und dass im zweiten Betriebsmodus zum statischen Wiegen das Poststück (A) stromabwärts in Richtung der weiteren Verarbeitungsstation (30) mit einer vorbestimmten Geschwindigkeit transportiert, gestoppt und dann statisch gewogen wird

6. Verfahren, nach Anspruch 5, **dadurch gekennzeichnet, dass** eine Dimensionsbestimmung in einer poststromaufwärts angeordneten ersten Verarbeitungsstation (10) erfolgt und mindestens ein auf ein Format und ein auf die Dicke bezogenes Signal zur Waage (20) übermittelt wird, wobei eine Auswertung des Signals vom Mikroprozessor (21) der dynamischen Waage (20) durchgeführt wird, um in Abhängigkeit vom Ergebnis die vorgenannte automatische Umschaltung vor dem statischen Wiegen des Poststückes (A) zu veranlassen, wenn Dicke, Höhe oder Dickenprofil des Poststückes (A) unzulässige Werte aufweisen.

7. Verfahren, nach Anspruch 5, **dadurch gekennzeichnet, dass** zur Steuerung der dynamischen Waage (20) und zur Auswertung der Gewichtsmessung Parametersätze im Speicher (23) bereitgestellt werden, die abhängig von der Dimension des Poststücks (A) ausgewählt werden.

8. Verfahren, nach Anspruch 7, **dadurch gekennzeichnet, dass** sich Parametersätze bezüglich des Sollwertes für die vorbestimmte Geschwindigkeit unterscheiden, mit welcher das Poststück (A) stromabwärts in Richtung der weiteren Verarbeitungsstation (30) transportiert wird.

9. Verfahren, nach Anspruch 7, **dadurch gekennzeichnet, dass** sich Parametersätze bezüglich der bei der Gewichtsbestimmung benötigten Abschaltkriterien (A1, A2, A3) und der Grenzwerte (G1, G2, G3) für Poststückgewichte unterscheiden.

## Claims

1. A method for the control of a rapid dynamic weighing balance, comprising controlling of the transport device (4) during the transport of postal items (A) to a further processing station (30); measuring with a weighing cell (7) during the transport; and analysing of the measured values by means of the microprocessor (21) of the dynamic weighing balance (20) for determining the weight during the dynamic weighing in a first operating mode and delivering weighing values to a further processing station (30); as well as automatic switching-over to a second operating mode for a semi-automatic operation of the weighing balance (20) with static weighing, **characterized in that** the automatic switching-over is made depending on the result of a determination of the dimensions of the postal item (A) to be subsequently delivered to the weighing balance (20) in a first processing station (10) arranged upstream in the flow of postal items.

2. A method according to Claim 1, **characterized in that**, prior to the weighing of the postal item (A), there is made a determination of the dimensions and a first analysis by the microprocessor (11) of the first processing station (10) and a switch-over signal is transmitted to the weighing balance (20) if the values permissible for dynamic weighing are exceeded by one of the dimensions or with regard to an admissible thickness profile; and that, in the second operating mode for static weighing, the postal item (A) is transported downstream in direction to a further processing station (30) at a predetermined speed, stopped and then weighed statically.

3. A method according to Claim 2, **characterized in that**, in both operating modes, the transport of postal items (A) by means of a controllable transport device (4) to the further processing station (30) takes place at a first speed the maximum value of which is limited by the speed value of the further processing station (30) and the set value of which is stored in a set of parameters for the control of the weighing balance (20) in the non-volatile memory (23).

4. A method according to Claim 2, **characterized in that**, in the second operating mode, the transport of postal items (A) by means of a controllable transport device (4) to the further processing station (30) takes place at a second speed the set value of which is stored in a set of parameters for the control of the weighing balance (20) in the non-volatile memory (23).

5. A method according to Claim 1, **characterized in that**, depending on the result of the determination of the dimensions of the postal item (A) at the first processing station (10) arranged upstream in the flow of postal items and on the result of an analysis of the determination of dimensions at the balance (20), there is switched over from a first to a second operating mode; and that, in the second operating mode for static weighing, the postal item (A) is transported downstream in direction to a further processing station (30) at a predetermined speed, stopped and then weighed statically.

6. A method according to Claim 5, **characterized in that** a determination of the dimensions is made at the first processing station (10) arranged upstream in the flow of postal items and at least one signal referring to the format and one signal referring to the thickness is transmitted to the balance (20), wherein the signal is analyzed by the microprocessor (21) of the weighing balance (20) in order to cause, depending on the result, the above-mentioned automatic switching-over before the static weighing of the postal item (A) if thickness, height or thickness profile of the postal item (A) show inadmissible values.

7. A method according to Claim 5, **characterized in that**, for the control of the weighing balance (20) and for the analysis of the weight measurement, there are provided sets of parameters in the memory (23) that are selected depending on the dimensions of the postal item (A).

8. A method according to Claim 7, **characterized in that** the sets of parameters differ with regard to the set value for the predefined speed at which the postal item (A) is transported downstream in direction to the further processing station (30).

9. A method according to Claim 7, **characterized in that** the sets of parameters differ with regard to the switch-off criteria (A1, A2, A3) required in the determination of weight and to the limiting values (G1, G2, G3) for weights of postal items.

## Revendications

1. Procédé de commande d'une balance dynamique rapide avec une commande de dispositif d'acheminement (4) lors du transport d'envois postaux (A) vers un autre poste de traitement (30) accompagné de mesures à l'aide d'une cellule de pesage (7) au cours de l'acheminement et d'une analyse des valeurs mesurées au moyen du microprocesseur (21) de la balance dynamique (20) afin de déterminer le poids lors du pesage dynamique dans le cadre d'un premier mode de service et d'un acheminement des valeurs de pesage au poste de traitement suivant (30) et accompagné d'une commutation automatique sur un second mode de service pour marche semi-dynamique de la balance (20) par pesage statique, **caractérisé en ce que** la commutation automatique s'effectue en fonction du résultat de la définition des dimensions de l'envoi postal (A) amené ensuite sur la balance (20) à un premier poste de traitement (10) disposé en amont du flux postal.

2. Procédé selon la revendication 1, **caractérisé en ce que** les dimensions sont déterminées et une première analyse est effectuée par le microprocesseur (11) du premier poste de traitement (10) avant le pesage de l'envoi postal (A) avec transmission d'un signal de commutation sur la balance dynamique (20) lorsque les valeurs admissibles pour un pesage dynamique sont dépassées par l'une des dimensions ou en rapport avec un profil d'épaisseur admissible et que l'envoi postal (A) est acheminé à une vitesse pré-définie, arrêté et ensuite pesé statiquement en aval du flux en direction du poste de traitement suivant (30) dans le cadre du second mode de service pour pesage statique.

3. Procédé selon la revendication 2, **caractérisé en ce que** les envois postaux (A) sont acheminés au moyen du dispositif d'acheminement (4) susceptible d'être commandé en direction du poste de traitement suivant (30) dans le cadre des deux modes de service à une première vitesse dont la valeur maximale est limitée par la valeur de vitesse du poste de traitement suivant (30) et dont la valeur nominale est mémorisée dans une série de paramètres destinés à la commande de la balance dynamique (20) et mémorisés dans une mémoire rémanente (23).

4. Procédé selon la revendication 2, **caractérisé en ce que** l'acheminement d'envois postaux (A) est effectué vers le poste de traitement suivant (30) au moyen du dispositif d'acheminement (4) susceptible d'être commandé dans le cadre du second mode de service à une seconde vitesse dont la valeur nominale est mémorisée dans une série de paramètres destinés à la commande de la balance dynamique (20) dans une mémoire rémanente (23).

5. Procédé selon la revendication 1, **caractérisé en ce que** la commutation d'un premier sur un deuxième mode de service est effectuée en fonction du résultat des dimensions déterminées sur l'envoi postal (A) au premier poste de traitement (10), situé en amont du flux postal, et en fonction du résultat d'une analyse des dimensions déterminées sur la balance (20) et **en ce que** l'envoi postal (A) est acheminé à une vitesse pré-déterminée en direction du poste de traitement suivant (30) en aval, arrêté et ensuite pesé statiquement dans le cadre du second mode de service pour pesage statique.

6. Procédé selon la revendication 5, **caractérisé en ce que** les dimensions sont déterminées à un premier poste de traitement (10) disposé en amont du flux postal et qu'au moins un signal relatif respectivement à un format et à l'épaisseur est transmis à la balance (20), en sachant qu'une analyse du signal est effectuée par le microprocesseur (21) de la balance dynamique (20) afin de déclencher en fonction du résultat la commutation automatique référencée ci-dessus avant le pesage statique de l'envoi postal (A) lorsque l'épaisseur, la hauteur ou le profil d'épaisseur de l'envoi postal (A) présentent des valeurs inadmissibles.

7. Procédé selon la revendication 5, **caractérisé en ce que** des séries de paramètres destinés à la commande de la balance dynamique (20) et à l'analyse du relevé de poids et qui sont sélectionnés en fonction de la dimension de l'envoi postal (A) sont fournis dans la mémoire (23).

8. Procédé selon la revendication 7, **caractérisé en ce que** des séries de paramètres se distinguent les unes des autres en termes de valeur nominale pour la vitesse déterminée au préalable avec laquelle l'envoi postal (A) est acheminé en aval du flux vers le poste de traitement suivant (30).

9. Procédé selon la revendication 7, **caractérisé en ce que** les séries de paramètres se distinguent les unes des autres en termes de critères de coupure (A1, A2, A3) requis lors de la définition de poids et de valeurs limites (G1, G2, G3) pour les poids d'envois postaux.
